# EUROPEAN PATENT SPECIFICATION

(11) **EP 2 430 117 B1**
(45) Date of publication and mention of the grant of the patent: **13.06.2018**
(21) Application number: 10772096.3
(22) Date of filing: 05.05.2010
(51) Int. Cl.: C09K 15/04, C08L 67/02, C08J 3/20, C08G 63/688, A23L 3/3436

(54) **OXYGEN SCAVENGING POLYESTER COMPOSITION**
SAUERSTOFFABSORBIERENDE POLYESTERZUSAMMENSETZUNG
COMPOSITION DE POLYESTER DÉSOXYGÉNANT

(30) Priority: 07.05.2009 IN 1199MU2009
(43) Date of publication of application: 21.03.2012
(73) Proprietor: Reliance Industries Limited, Mumbai 400 021 Maharashtra (IN)
(72) Inventor: AGARWAL, Uday, Shankar, Mumbai 400 071 Maharashtra (IN); VENKATAKRISHNAN, B., V., Kaladipet 600 019 Chennai (IN); RAJESH, Jalan, Delhi 110007 (IN); SREEKUMAR, Thaliyil, Veedu, Kannur 670303 Kerala (IN); AYODHYA, Srinivasacharya, Ramacharya, Navi Mumbai 400 703 (IN); JAIN, Ashwin, Kumar, Navi Mumbai 410 206 Maharashtra (IN); JADIMATH, Shrivamurthy, Padadayya, Dharwad 580 006 Karnataka (IN)
(74) Representative: Goodman, Simon John Nye
(86) International application number: PCT/IN2010/000291
(87) International publication number: WO 2010/128526

(56) References cited:
- WO-A1-03/022907
- WO-A1-2006/052892
- WO-A2-2006/023583
- US-A- 5 281 360
- US-A- 5 922 782
- US-A- 5 922 829

## Description

### FIELD OF INVENTION

The invention relates to polyester resin compositions, processes for preparing such compositions and articles manufactured there from.

### DEFINITIONS

As used in the present specification, the following words and phrases are generally intended to have the meanings as set forth below, except to the extent that the context in which they are used indicate otherwise.

Co-SIPA means a sulfonated copolyester which is a copolymer of terephthalic acid (or 1 dimethyl terephthalate), ethylene glycol and Co-bis(5-sulfoisophthalic acid) (or the corresponding dimethyl ester), wherein the pendant anionic sulfonate group is neutralized by a Co metal in its positive oxidation state (Co²⁺)
DEG means diethylene glycol.
F&B means food and beverage.
I.V. means Intrinsic Viscosity.
MXD6 means poly(m-xylene adipamide);
OTR means 'Oxygen Transmission Rate'

### BACKGROUND

Packaging in whatever form - rigid or flexible - not only serves to contain substances inside, but is also required to prevent inward transmission of harmful substances, if any, from the outside environment. Atmospheric oxygen is one such relatively harmful substance that reduces shelf life of a packaged product by promoting quicker degradation or denaturation, especially as far as packaged F&B products are concerned.

Compared with glass, the traditional packaging material for food & beverage, polymeric packaging has the advantage of lighter weight, less breakability, less consumption of packaging material for unit packaged substance and hence reduced cost. But packaging made of polymeric material generally lacks the barrier that glass could provide against inward and outward flow of gases, particularly water, carbon dioxide and oxygen. This disadvantage has greatly restricted the use of polymeric material in packaging foods and beverages.

Polyethylene terephthalate (PET) is a prolifically used packaging material, especially for substances including but not limited to carbonated beverages and beer. It provides nearly glass-like clarity and is about 10 times as impermeant to oxygen as polypropylene, another potential choice of material in this regard. PET can also serve for almost absolute oxygen barrier for practically large lengths of shelf life, given sufficient wall thickness. However, there is always a need to reduce the cost to packaging relative to the cost of the packaged substance, wherein wall thickness reduction can contribute substantially. Wall thickness reduction, on the other hand, deteriorates effective oxygen barrier of PET and reduces shelf life of a packaged product significantly, hence the need for an, added oxygen barrier substance with generic PET.

Although there are extremely impermeable polymers like ethylene-vinyl alcohol copolymers and vinylidene-vinyl chloride copolymers available, they are not the choices of the processor as single polymer solutions for making bottles or other packages because of relatively high cost. Neither are they effective as barriers when blended with PET as they are only passive, physical barriers of oxygen and can lead to leakage through barrier to oxygen through those locations in the blend morphology where the respective phases are not present. Therefore, these materials cannot be efficiently incorporated in single- layer packaging solutions. The more common solution employing these passive barrier materials is multiple layer packaging, where the layer of barrier is composed of a homogeneous phase of anyone of the above copolymers and the other layers are made of any other generic polymer like PET or polypropylene, which still remain less cost effective propositions. Packages made out of multilayered structures utilizing such barrier copolymers in the core layer also need to be hermetically sealed as any inadvertently introduced oxygen would remain inside and degrade or denature the packaged product before the expiry of the shelf life.

On the other hand US5300572A, US6083585A, US7049359B2, US20060202161A1,US20070088133A1, WO2005023530A1,WO2006063032A2 and WO2006132671A1 teach the use of alternative barrier materials, called the "active oxygen barriers", which deplete oxygen by consuming it, i.e. by themselves getting oxidized by the atmospheric oxygen. The biggest advantage is that any inadvertently introduced oxygen inside the packaged environment is also consumed by the package itself, when made of packaging materials comprising these active oxygen barrier substances. US5300572A, US6083585A and US20060202161A1 disclose that unsaturated olefin copolymers, oligomers or such blocks in copolyester can act as active oxygen barrier in presence of transition metal catalysts. A transition metal in its positive oxidation state catalyzes the oxidation of the unsaturated olefin oligomer or copolymer block in the presence of UV or visible light. US7049359B2, US20070088133A1, WO2005023530A1, WO2006063032A2 and WO2006132671A1 on the other hand disclose that partially aromatic polyamides also act similarly as "active oxygen barriers" and their oxidation is similarly catalyzed by transition metals. One example of such a polyamide - as disclosed in US7049359B2 - is a copolymer of m-xylenediamine and adipic acid (MXD6). Whether the active oxygen barrier material is the olefin oligomeric block in copolyester or the polyamide, such a material is blended with generic packaging polyester like polyethylene terephthalate (PET) to provide a final packaging solution. The resultant blend is a process-able resin, which is generally referred to as the "oxygen scavenging composition". The scavenging resin forms the barrier layer, which can be employed either as a single layer packaging or as one or more layers in a multi-layer packaging where the other layers are made of generic polyester or polyolefin, e.g. PET or polypropylene (PP). US7049359B2 discloses that MXD6 can be advantageously employed in 1-7 wt% of the whole formulation. Generally, the active oxygen barrier material is present in less than 10 wt% of the total scavenging resin formulation, thus providing resultant barrier polyester at a minimal cost addition to that of the generic polyester.

Whether the active oxygen barrier material inside the scavenging resin is an unsaturated olefin copolymer or an unsaturated oligomeric olefin block in a copolyester resin or a partially aromatic polyamide copolymer, a sulphonated polyester copolymer where the sulphonate pendant has an alkali metal as a counter cation has generally been employed as a compatibilizer in the prior art, for making a blend of the above with a generic polyester or copolyester, like the polyethylene terephthalate (PET).

Although WO2006132671A1 teaches that the transition metal for employing in the catalysis of the oxidation of the active oxygen barrier can be any metal from Group 3, 4, 13, or 14, the most frequently used transition metal for this purpose has been found to be cobalt (Co). Other metals like Zn have also been un-frequently employed. It has been generally found that the Co metal is employed in its positive oxidation state. US20060202161A1 discloses use of a Co salt of various long chain organic carboxylic acids (or, fatty acids) for this purpose. Other Co-salts have also been disclosed. WO2006063032A2 states that even virgin Co or Zn metal can also be employed in the scavenging resin.

Catalytic metals compounds have been described as oxidation catalyst in the prior art. Among the suggested compounds, metals salts of long chain fatty acids are preferred (WO 2005/023530). Cobalt-octoate is one such example. However, these long fatty acids and their metal salts are not soluble in ethylene glycol or water which are the common carriers employed for additives during polyester polymerization. For example, cobalt octoate can be sourced as a solution in hydrocarbon solvents that are flammable. These solutions offer the possibility of incorporating cobalt octoate in polyester either by coating on polyester chips prior to extrusion while devolatilizing the solvents which process demands special equipment, or by addition during commercial polymerization where the devolatilization would contaminate the recycling monomer and condensates, thus demanding additional separation process/equipment. Even if solvent free cobalt octoate or some other Co salt or oxide can be sourced, its addition during polymerization would not lead to uniform distribution in polymer as it is known in the art of polyester polymerization that salts and catalysts are best added as solutions in the monomer ethylene glycol (e.g. US 2002/0169273) or in the polymerization product water. Further, US5922829 disclose a copolyester consisting essentially of residues of a dicarboxylic acid component and residues from a diol component, the method comprising copolymerizing into the copolyester about 0.1 to about 5.0 mol % of a dicarboxylic acid sulfonate monomer containing at least one divalant metal sulfonate group attached to an aromatic nucleus. Copolyesters of US5922829 have high molecular weight and possess high melt viscosity and melt strength which render them foamable with a wide range of foaming agent. However, US5922829 does not disclose the use of copolyesters for preparing an oxygen scavenging composition. WO2003022907 disclose a composition comprises repeat units derived from a first diol and a sulfonated dicarboxylic acid. This composition can be used to produce ether esters to improve the dyeability of polyesters. However, the composition of WO2003022907 does not use for the purpose of an oxygen scavenging.

EP0301719 disclose a composition comprising a polymer and having oxygen-scavenging properties, characterised in that the composition scavenges oxygen through the metal- catalysed oxidation of an oxidisable organic component which is either a polyamide or a poly olefin. The metal oxidation catalyst as taught by EP0301719 is (C₈-C₁₀) cobalt carboxylate which is introduced in the form of a solution in white spirit.

EP1838798 disclose a molten formulated polyester polymer composition that comprises zinc, cobalt, and a blend of a polyester polymer and an oxygen scavenging composition. The oxygen scavenging composition in the case of EP 1838798 comprises a polyamide polymer, and at least a portion of the cobalt present in the molten composition is virgin cobalt.

EP0927218 disclose a bilayered packaging article comprising an oxygen barrier laminar composition comprising a melt formed layer of polyester: copolymer comprising predominantly polyester segments and an oxygen scavenging amount of polyolefin oligomer segments. Another layer in the article is selected from the group consisting of polyethylenevinyl alcohol, polyolefin, and polyester lacking polyolefin oligomer segments. The polyester copolymer of EP0927218 is capable of absorbing at least 0.4 cc of oxygen per gram of copolymer at temperatures in the range of about 4 °C to about 60 °C.

EP1773590 discloses a multilayer structure, wherein one of the layers is produced from a copolymer, which comprises polyester and repeat units derived i from 0.001 to 7 mole % of a sulfonic acid comonomer.

EP1663630 disclose a composition for containers comprising: polyester, partially aromatic polyamide, ionic compatibilizer, and a cobalt salt. The ionic compatibilizer as taught in EP 1663630 is a copolyester containing a metal sulfonate salt. Cobalt is an essential component of the composition which acts as a metal oxidation catalyst.

EP1778791 discloses a melt blended resin for packaging articles that comprises a base polymer, oxidizable organic polymer, transition metal catalyst, and a colorant. The transition metal catalyst as used in EP 1778791 is in the form of cobalt stearate. Further, EP1778791 also teaches incorporation of an alkali metal sulfonate as an, ionic compatibilizer in the resin which is 5- sodiumsulfoisophthalic acid.

EP1784300 teaches an oriented article comprising a blend of polyester and polyamide in which the refractive index difference between said polyester and said polyamide is less than 0.01. The polyester includes an ionic compatibilizer which is a copolyester containing a metal sulfonate salt, wherein the metal ion can be Na+, Li+, K+, Zn++, Mn++, Ca++. The oriented article further comprises cobalt salt as an oxidation catalyst.

Prior art (US7049359) indicates that the oxygen scavenging capacity may appear only after ageing of the blend, as the oxidation catalyst may be embedded in the wrong phase, i.e. away from the scavenger polymer phase.

Another shortcoming of the oxygen scavenging compositions known in the art is that the metal oxidation catalyst present in such compositions, either in the form of a solid powder or in the form of a small molecule form of a fatty acid salt or any other small carboxylic acid salt, undesirably leach from the package wall into the contained F&B.

In view of the shortcomings of the prior art, there is thus felt a need for an oxygen scavenging composition which contains a non-leaching metal oxidation catalyst that is uniformly distributed in the scavenging polymer.

### OBJECTS OF THE INVENTION

It is an object of the present invention to provide a metal oxidation catalyst that is useful for manufacturing safe and non-toxic packaging material with oxygen barrier properties.

It is another object of the present invention to provide an oxygen scavenging composition.

It is another object of the present invention to provide an oxygen scavenging composition that is specifically devoid of a metal oxidation catalyst in the form of a solid powder or in the form of a small molecule form of a fatty acid salt or any other small carboxylic acid salt that leaches undesirably from the package wall into the contained F&B.

It is still another object of this invention to provide a cost effective oxygen barrier packaging material with appropriate oxygen impermeability manufactured from the oxygen scavenging composition.

It is still further object of the present invention to provide an oxygen scavenging composition wherein the metal oxidation catalyst is uniformly distributed throughout the composition.

It is still another object of the present invention to obviate the use of flammable solvents for dispersing the metal oxidation catalyst in the polymer thereby making the process of preparation of the oxygen scavenging composition safer.

It is still another aspect of the present invention to provide a process for the preparation of 'active metal oxidation catalyst' containing comonomer.

It is yet another further object of the present invention to provide a process for the preparation of a polyester co-polymer that contains the 'active metal oxidation catalyst' containing comonomer.

A further object of the present invention is to provide a process for manufacture of safe oxygen barrier packaging material made by deploying oxygen scavenging resin composition.

### SUMMARY OF THE INVENTION

In a first aspect of the present invention there is provided an oxygen scavenging composition, comprising the following components:
A) a polyester component;
B) an organic oxidizable polymeric component; and
C) a polymer-bound 'oxidation catalyst' bearing component
wherein component C comprises a neutralized sulfonated 'oxidation catalyst' carrying comonomer prepared from an acid and an alcohol, said acid being selected from the group consisting of sulfophthalic acid, sulfoterephthalic acid, sulfoisophthalic acid, 4- sulfonaphthalene-2, 7-dicarboxylic acid, said alcohol being selected from the group consisting of group of ethylene glycol, propylene glycol, 1,3 propanediol, 1,4 butanediol, 1,6 hexanediol, 1,8-octanediol, wherein 0.01 to 1 mole fraction of the total neutralized sulfonated monomer is neutralized by Co metal in its positive oxidation state (Co²⁺).

Typically, the polyester component comprises a polyester obtained by copolymerizing:
- at least one member selected from the group of aromatic dicarboxylic acids consisting of terephthalic acid, isophthalic acid, succinic acid, glutaric acid, adipic acid, sebacic acid, naphthalene dicarboxylic acid and cyclohexane dicarboxylic acid or the corresponding diester with a lower alcohol and their ester forming derivatives;
- at least one member selected from the group of aliphatics consisting of ethylene glycol, propylene glycol, 1,3-propanediol, 1,4-butanediol, 1,6-hexanediol, 1,8-octanediol, 1,10 decanediol, 2,2-dimethyl- 1,3 - propanediol, 1,4-cyclohexane dimethanol, 1,4-cyclohexanediol, cyclobutanediol, cyclobutane dimethanol, tetramethane cyclobutanediol, diethylene glycol, polyethylene glycol, polypropylene glycol, polytetramethylene glycol and their ester forming derivatives.

Typically, the polyester component comprises a homopolymeric condensate of polyethylene terephthalate.

Typically, the polyester component is a homopolymeric condensate of polyethylene terephthalate that comprises ethylene isophthalate, the amount of ethylene isophthalate being < 2.5%.

Typically, the organic oxidizable polymeric component is at least one selected from the group consisting of :
- a copolymer of m-xylenediamine and adipic acid (MXD6) comprising those containing repeating units of the generic formula NH-CH₂-arylene-CH₂-NH-CO- alkylene-CO- wherein the preferred arylene groups are of phenylene type, particular m-phenylene, which may be substituted with alkyl groups and/or condensed with other substituted or unsubstituted aromatic rings and the preferred alkylene moieties are composed of between 1 and 10 carbon atoms, preferably n-butylene)
- a fully aliphatic poly-amide comprising repeating units of the general formula - CO(CH2)nCONH(CH2)mNH- or (CH2)PCONH- wherein any of n, m or p can be integers between 3 and 7, preferably between 4 and 6; and
- a co-polyester, derived from hydroxyl- or carboxyl-terminated monomelic, oligomeric or polymeric olefin or olefin oxide segments capable of oxygen scavenging, constituted by at least one member selected from the group consisting of a dicarboxylic, hydroxy-carboxylic or dihydroxy compound comprising at least one olefinic unsaturation, wherein the number average molecular weight of such olefin- containing condensate segment is between 100 and 50,000, preferably between 500 and 5000 and most preferably between 1000 to 3000.

Typically, the 'oxidation catalyst' bearing component, component C, is a polar copolyester synthesized by copolymerizing:
- at least one member selected from the group of aromatic dicarboxylic acids consisting of terephthalic acid, isophthalic acid, succinic acid, glutaric acid, adipic acid, sebacic acid, naphthalene dicarboxylic acid and cyclohexane dicarboxylic acid, the corresponding diester with a lower alcohol and their ester forming derivatives;
- at least one member selected from the group of aliphatic diols consisting of ethylene glycol, propylene glycol, 1,3 -propanediol, 1,4-butanediol, 1,6-hexanediol, 1,8-octanediol, 1,10 decanediol, 2,2-dimethyl-1,3-propanediol, 1,4-cyclohexane dimethanol, 1 ,4-cyclohexanediol, cyclobutanediol, cyclobutane dimethanol, tetramethane cyclobutanediol, diethylene glycol, polyethylene glycol, polypropylene glycol, polytetramethylene glycol and their ester forming derivatives; and - a neutralized sulfonated 'oxidation catalyst' carrying comonomer.

Typically, the cobalt content of the 'oxidation catalyst' bearing component is greater than 1000pm. Preferably, the cobalt content of component C is greater than 1700ppm.

Typically, the DEG content of the Oxidation catalyst' bearing component is less than 8%. Preferably, the DEG content of the oxygen bearing component is less than 6%.

Typically, the intrinsic viscosity of the polyester component is in the range of about 0.6 to 1.0. Preferably, the intrinsic viscosity of the polyester component is in the range of about 0.7 to 0.85.

Typically, the proportion of the polyester component in the composition is in the range of about 85 % to about 99% with respect to the mass of the composition.

Typically, the organic oxidizable polymeric component is an aromatic polyamide.

In accordance with a preferred embodiment of the present invention, the organic oxidizable polymeric component is poly(m-xylene adipamide).

Typically, the organic oxidizable polymeric component comprises partially aromatic polyamide, the proportion of the partially aromatic polyamide being in the range of about 0.5% to 10% with respect to the mass of the composition.

Alternatively, the organic oxidizable polymeric component is an olefin containing segment containing at least one olefinic unsaturation, the proportion of the olefin containing segment being in the range of about 0.2% to 5% with respect to the mass of the composition.

In accordance with another embodiment of the present invention, component C comprises a condensate of ethylene terephthalate and a neutralized sulfonated Oxidation catalyst' carrying comonomer.

In accordance with still another embodiment of the present invention, the polar Oxidation catalyst' bearing component is a copolymer of terephthalic acid ethylene glycol and Co- bis(5-sulfoisophthalic acid) or a corresponding dimethyl or diglycolate ester.

Typically, the intrinsic viscosity (IV) of component C is in the range of 0.2 to 1.2. Preferably, the intrinsic viscosity (IV) of component C is in the range of 0.4 to 0.85.

Typically, the amount of cobalt metal present in the composition is in the range of about 10 to 1000 ppm. Preferably, the amount of cobalt metal present in the composition is in the range of about 20 to 500 ppm.

In a second aspect of the present invention there is provided a preform made from the oxygen scavenging composition in accordance with the present invention.

In a third aspect of the present invention there is provided a monolayer bottle blown from the oxygen scavenging composition in accordance with the present invention.

In a fourth aspect of the present invention there is provided a packaging article made from the oxygen scavenging composition as claimed in claim 1, wherein the oxygen transmission rate (OTR) of the article is less than 0.3 cc.m⁻² day⁻¹ at 0.36 mm thickness of the wall of the packaging article. Preferably, the oxygen transmission rate (OTR) of the article prepared using the oxygen scavenging composition of the present invention is less than 0.2 cc.m⁻² day⁻¹ at 0.36 mm thickness.

In a fifth aspect of the present invention there is provided a neutralized sulfonated Oxidation catalyst' carrying comonomer with compatibilizing and oxidation catalytic activity prepared from a dicarboxylic acid and a diol, said dicarboxylic acid being selected from the group consisting of sulfophthalic acid, sulfoterephthalic acid, sulfoisophthalic acid, 4-sulfonaphthalene-2, 7-dicarboxylic acid, said diol being selected from the group consisting of group of ethylene glycol, propylene glycol, 1,3 propane diol, 1,4 butanediol, 1,6 hexane diol, 1,8-octanediol, wherein 0.01 to 1 mole fraction of the total neutralized sulfonated monomer is neutralized by Co metal in its positive oxidation state (Co²⁺).

In a sixth aspect of the present invention there is provided a polar co-polyester having a neutralized sulfonated Oxidation catalyst' carrying comonomer on the backbone, said said copolyester being synthesized by copolymerizing:
(i) at least one member selected from the group of aromatic dicarboxylici acids comprising terephthalic acid, isophthalic acid, succinic acid, glutaric acid, adipic acid, sebacic acid, naphthalene dicarboxylic acid and cyclohexane dicarboxylic acid or the corresponding diester with a lower alcohol and their ester forming derivatives, or combinations thereof;
(ii) at least one member selected from the group of aliphatic diols comprising ethylene glycol, propylene glycol, 1,3 -propanediol, 1,4-butanediol, 1,6-hexanediol, 1,8-octanediol, 1,10 decanediol, 2,2-dimethyl-1,3-propanediol, 1,4-cyclohexane dimethanol; 1,4-cyclohexanediol, cyclobutanediol, cyclobutane dimethanol, tetra methane cyclobutanediol, diethylene glycol, polyethylene glycol, polypropylene glycol or polytetramethylene glycol and their ester forming derivatives, or combinations thereof; and
(iii) a neutralized sulfonated 'oxidation catalyst' carrying comonomer.

In a seventh aspect of the present invention there is provided a process of preparing a neutralized sulfonated Oxidation catalyst' carrying comonomer said process comprising:
- dissolving a sulfonated dicarboxylic acid or a corresponding ester thereof in a diol to form a solution;
- adding a cobalt acetate to the solution to form a reaction mixture;
- heating the reaction mixture at a temperature in the range of about 20 to 14O °C, while employing a condenser to collect acetic acid as the byproduct to obtain a neutralized cobalt containing co-monomer.

Typically, the sulfonated dicarboxylic acid is 5, sulfo dimethylisophthalate (having the structure: H⁺SO₃⁻-C₆H₃O₄). Typically, the diol is ethylene glycol.

In eighth aspect of the present invention there is provided a process of preparing component C with DEG content less than 8 %, preferably less than 6% , said process comprising the following steps:
- subjecting at least one dicarboxylic acid or mono-esters, di-esters or anhydrides thereof and at least one diol to esterification and melt polymerization in a polymerization vessel by heating;
- after a period of about 1 to 3.5 hrs, venting the polymeric vessel for depressurizing it to atmospheric pressure at a temperature in the range of about 240 °C to about 270 °C;
- adding the neutralized < sulfonated commoner (oxidation catalyst) solution to esterification product under stirring;
   - adding a polymerization catalyst to the reaction mixture;
   - heating the reaction mixture up to about 285 °C under increasing vacuum to obtain a copolymer.

Typically, the neutralized sulfonated comonomer is added in a form selected from the group of forms consisting of solid, molten and dissolved form.

In ninth aspect of the present invention, there is provided a process for preparing an oxygen scavenging composition of the present invention, comprising copolymerizing component A and component B to obtain a co-polymer and blending component C with the co-polymer. Alternatively, component A and component C are pre-blended and component C is mixed with the blend of component A and C. Still alternatively, the oxygen scavenging composition of the present invention is prepared by blending Component A, component B and Component C together.

### DETAILED DESCRIPTION OF INVENTION

The present invention is directed towards the active oxygen scavenger type formulations rather than passive, physical gas barrier. The active oxygen scavenging type compositions comprise an organic oxidizable polymer and a metal oxidation catalyst. The present invention provides an oxygen scavenging composition that comprises a metal oxidation catalyst which is in a polymer-bound form that is uniformly distributed in the composition. The polymer-bound oxidation catalyst is in the form a co-polymer that contains a neutralized sulfonated comonomer.

In accordance with the present invention, there is provided an oxygen scavenging composition, comprising the following components:
A) a polyester component;
(B) an organic oxidizable polymeric component; and
(C) a polymer-bound Oxidation catalyst' bearing component
wherein component C comprises a neutralized sulfonated 'oxidation catalyst' carrying comonomer prepared from a dicarboxylic . acid and a diol, said acid being selected from the group consisting of sulfophthalic acid, sulfoterephthalic acid, sulfoisophthalic acid, 4-sulfonaphthalene-2, 7-dicarboxylic acid, said diol being selected from the I group consisting of group of ethylene glycol, propylene glycol, 1,3 propane diol, 1,4 butanediol, 1,6 hexanediol, 1,8-octanediol, wherein 0.01 to 1 mole fraction of the total neutralized sulfonated monomer is neutralized by Co metal in its positive oxidation state (Co²⁺)

### Component A

The polyester component of the oxygen scavenging composition in accordance with this invention comprises:
(i) at least one member selected from the group of aromatic dicarboxylic acids comprising terephthalic acid, isophthalic acid, succinic acid, glutaric acid, adipic acid, sebacic acid, naphthalene dicarboxylic acid and cyclohexane dicarboxylic acid or the corresponding diester with a lower alcohol and their ester forming derivatives, or combinations thereof; and
(ii) at least one member selected from the group of aliphatic diols comprising ethylene glycol, propylene glycol, 1,3 -propanediol, 1,4-butanediol, 1,6-hexane diol, 1,8-octanediol, 1,10 decanediol, 2,2-dimethyl- 1,3 -propanediol, 1,4-cyclohexane dimethanol, 1,4- cyclohexanediol, cyclobutanediol, cyclobutane dimethanol, tetramethane cyclobutanediol, diethylene glycol, polyethylene glycol, polypropylene glycol or polytetramethylene glycol and their ester forming derivatives, or combinations thereof.

In accordance with one embodiment of the present invention the component A comprises a homopolymeric condensate of polyethylene terephthalate. In accordance with another embodiment of the present invention, the component A is a homopolymeric condensate of polyethylene terephthalate that comprises ethylene isophthalate, the amount of ethylene isophthalate being < 2.5%.

The intrinsic viscosity (IV) of component (A) is between 0.6 and 1.0. In accordance with one embodiment, the (IV) of polyester component is in the range of about 0.7 to about. 0.85.

### Component B

The organic oxidizable polymeric component of the oxygen scavenging composition in accordance with the present invention is at least one selected from the group consisting of:
(i) a partially aromatic oligo- or poly-amide condensate capable of oxygen scavenging, including but not limited to a copolymer of m-xylenediamine and adipic acid commonly called MXD6, comprising those containing repeating units of the generic formula NH-CH₂-arylene-CH₂-NH-CO-alkylene-CO- wherein the preferred arylene groups are of phenylene type, particular m-phenylene, which may be substituted with alkyl groups and/or condensed with other substituted or unsubstituted aromatic rings and the preferred alkylene moieties are composed of between 1 and 10 carbon atoms, preferably n- butylene,
(ii) a fully aliphatic oligo- or poly-amide condensate capable of oxygen scavenging, comprising those containing repeating units of the general formula - CO(CH₂)ₙCONH(CH₂)ₘNH- or (CH₂)ₚCONH- or combinations thereof wherein any of n, m or p can be integers between 3 and 7, preferably between 4 and 6;
(iii) an oligo- or poly-condensate, including but not limited to a copolyester, derived from hydroxyl- or carboxyl-terminated monomelic, oligomeric or polymeric olefin or olefin oxide segments capable of oxygen scavenging, constituted by at least one member selected from the group comprising a dicarboxylic, hydroxy-carboxylic or dihydroxy compound comprising at least one olefinic unsaturation, wherein the number average molecular weight of such olefin-containing condensate segment is between 100 and 50,000, preferably between 500 and 5000 and most preferably between 1000 to 3000.

The active oxygen scavenging component B is a polycondensate essentially comprising an oxygen scavenging moiety that is either the partially aromatic polyamide segment or the monomelic, oligomerc or polymeric olefin-containing segment as defined above and optionally containing other condensates essentially joined together through copolymeric linkages and optionally distributed in a random fashion along the copolymeric backbone, wherein the total amount of the oxygen scavenging moiety is between 0.5 and 10 wt% relative to the total weight of A, B and C when the scavenging moiety is the partially aromatic polyamide and between 0.2 and 5 wt% when the scavenging moiety is the olefin-containing segment.

In accordance with one embodiment of the present invention, Component B is poly(m- xylene adipamide).

The polymer bound 'oxidation catalyst' bearing component in accordance with the present invention is a polar co-polyester synthesized by co-polymerizing:
(i) at least one member selected from the group of aromatic dicarboxylic acids consisting of terephthalic acid, isophthalic acid, succinic acid, glutaric acid, adipic acid, sebacic acid, naphthalene dicarboxylic acid and cyclohexane dicarboxylic acid, the corresponding diester with a lower alcohol and their ester forming derivatives;
(ii) at least one member selected from the group of aliphatic diols consisting of ethylene glycol, propylene glycol, 1,3 -propanediol, 1,4-butanediol, 1,6-hexane diol, 1,8-octane diol, 1,10 decanediol, 2,2-dimethyl- 1,3 -propanediol, 1 ,4-cyclohexane dimethanol, 1,4-cyclohexane diol, cyclobutanediol, cyclobutane dimethanol, tetramethane cyclobutanediol, diethylene glycol, polyethylene glycol, polypropylene glycol, polytetramethylene glycol and their ester forming derivatives; and
(iii) an oxidation catalyst.

The intrinsic viscosity (IV) of component (C) in accordance with the present invention is in the range of about 0.2 to 1.2. In accordance with one of the embodiments of the present invention the IV of component C is in the range of about 0.4 to about 0.85.
The cobalt content of the 'oxidation catalyst' bearing component, Component C is greater than 1000pm; preferably, the cobalt content of component C is greater than 1700ppm.

In accordance with one of the embodiments of the present invention, Component C comprises a condensate of ethylene terephthalate and a neutralized sulfonated 'oxidation catalyst' carrying comonomer.

In accordance with one of the embodiments of the present invention, Component C is a copolymer of terephthalic acid ethylene glycol and Co-bis(5-sulfoisophthalic acid) or a corresponding dimethyl or diglycolate ester.

The DEG content of the Oxidation catalyst' bearing component, Component C is less than 8%. Preferably, DEG content of component C is less than 6%. It is known that the higher DEG content of the polymer adversely affects the thermo mechanical properties of the container made there from.

By building the oxidation catalyst in the polar polyester copolymer, the present invention increases the possibility of contact between the catalyst therein and the scavenger polymer, because it is known in prior art that the copolyester provides the compatibilizing action by migrating towards the dispersed phase, which in the present invention would be the scavenger polymer, and resting at the interface (Polymer 2005; 46: 6706), while also reducing the dispersion size (J Appl Polym Sci 2005; 97: 1361), thus increasing available surface area of interaction between the catalyst and the oxidizable polymer. It has also been observed that the sulfonate ions interact strongly with aromatic amides. The attachment of Cobalt to the sulfonated polymer, thus ensures better interaction between the polymer bound Co metal and the oxidizable amide phase.

The components (A) and (B) are optionally copolymerized while the component (C) is blended to the said copolymer, or all the components of (A), (B) and (C) are blended together, in the final composition. In accordance with one embodiment of the invention, component A and component C are pre-blended and are then mixed with component B.

The oxygen scavenging resin composition of the present invention is designed in such a way that A is present in the range from 99 to 85 wt%, B from 0 to 5 wt% and C from 1 to 10 wt%, relatively to the total weight of A, B and C together.

The amount of cobalt metal present in the oxygen scavenging composition in accordance with the present invention is in the range of about 10 to 1000 ppm. In accordance with one preferred embodiment of the present invention, the amount of cobalt metal present in the oxygen scavenging composition is in the range of about 20 to 500 ppm.

The present invention therefore also provides a process to prepare polar co-polyester bearing the polymer-bound oxidation catalyst with DEG content less than 8 %, preferably lesser than 6%, said process comprising the following steps:
- subjecting at least one dicarboxylic acid or mono-esters, di-esters or anhydrides thereof and at least one diol to esterification and and melt polymerization in a polymerization vessel by heating;
- after a period of about 3 to 3.5 hrs, venting the polymeric vessel for depressurizing it to atmospheric pressure at a temperature in the range of about 240 °C to about 270 °C;
- adding the oxidation catalyst to esterification product under stirring;
- adding a polymerization catalyst to the reaction mixture;
- heating the reaction mixture up to about 285 °C to obtain a copolymer.

The sulfonated polar polyester in accordance with this invention is synthesized by addition during polymerization a neutralized sulfonated 'oxidation catalyst carrying comonomer having reactive functional groups capable of participating in the polymerization reaction. The reactive functional group is selected from alkenyl, OH, OR, CH2OH, NH2, CHO, COCl or COOR₅ where R₅ is as defined herein. During polymerization, the monomelic agent reacts with compound(s) selected from the group consisting of carboxylic acids, their salts, acid chlorides, acid anhydrides, alcohols, esters, alkenes, alkenyl benzenes in the presence of a polymerization catalyst. The polymerization catalyst is a metal or non-metal based catalyst conventionally used for polymerization reactions.

In certain polymerization reactions, the compatibilizing agent can also provide the necessary catalytic activity and thus reduce or eliminate the requirement of using a separate polymerization catalyst. The polymerization reaction is carried out either as a batch process or as a continuous process. One or more comonomer, differing in the type of metal or differing in the organic part of the molecule, can be used simultaneously in the polymerization reactions. Moreover, the comonomer can be added to the polymerization mixture at any stage during the polymerization,' i.e. the comonomer can be added at the beginning of the polymerization, during the polymerization or towards the end of polymerization. The comonomer can be mixed with the polymerization mixture in the solid, molten or dissolved form.

A post polymerization step, such as solid state polymerization (SSP), may be required to increase the polymer molecular weight and viscosity suitable for the application such as injection molding and stretch blow molding. The comonomer can also be blended in an additional step following the polymerization. If the addition of comonomer leads to decrease in the polymer molecular weight, the molecular weight is increased by further polymerization, for example by addition of chain extenders or by polymerization in the solid state. Concentrated master batches of the compositions may be prepared and subsequently blended (e.g. during injection molding), as portions, to additional quantities of base polymer to achieve the final desired composition. Alternatively, the blended melt of the copolymer with other polymers is extruded to obtain polymer strands or fast quenched and then converted to chips.

In accordance with the present invention, there is provided a process for production of sulfonated polar polyester resin(Component C) having I.V. of about 0.2 dl/g to about 1.2 dl/g, the process comprising:
a) esterifying and melt polymerizing at least one dicarboxylic acid or mono-esters thereof or di-ester thereof or anhydrides thereof and at least one diol at temperature in the range of 250 °C to 290 °C, while adding at the beginning or during the polymerization, a sulfonated monomeric agent containing reactive functional groups capable of participating in the polymerization reaction
b) forming the solid copolyesters particles from the molten polymer there using a suitable particle forming process such as underwater pelletizer, optionally followed' by a crystallization process and a solid state polymerization process to increase the I.V.

In accordance with the present invention , there is provided a neutralized sulfonated Oxidation catalyst carrying comonomer with compatibilizing and oxidation catalyst activity, prepared from a dicarboxylic acid and a diol, said dicarboxylic acid being selected from the group consisting of sulfophthalic acid, sulfoterephthalic acid, sulfoisophthalic acid, 4-sulfonaphthalene-2, 7-dicarboxylic acid, said diol being selected from the group consisting of group of ethylene glycol, propylene glycol, 1,3 propanediol, 1,4 butanediol, 1,6 hexanediol, 1,8-octanediol, wherein 0.01 to 1 mole fraction of the total neutralized sulfonated monomer is neutralized by Co metal in its positive oxidation state (Co²⁺) .

In accordance with the present invention there is also provided a polar sulfonated copolyester containing a neutralized sulfonated 'oxidation catalyst carrying comonomer, in its backbone, said copolyester being synthesized by copolymerizing:
(i) at least one member selected from the group of aromatic dicarboxylic acids comprising terephthalic acid, isophthalic acid, succinic acid, glutaric acid, adipic acid, sebacic acid, naphthalene dicarboxylic acid and cyclohexane dicarboxylic acid or the corresponding diester with a lower alcohol and their ester forming derivatives, or combinations thereof;
(ii) at least one member selected from the group of aliphatic diols comprising ethylene glycol, propylene glycol, 1,3 -propanediol, 1,4-butanediol, 1,6-hexanediol, 1,8-octanediol, 1,10 decanediol, 2,2-dimethyl-1,3-propanediol, 1 ,4-cyclohexane dimethanol, 1,4- cyclohexanediol, cyclobutanediol, cyclobutane dimethanol, tetramethane cyclobutanediol, diethylene glycol, polyethylene glycol, polypropylene glycol or polytetramethylene glycol and their ester forming derivatives, or combinations thereof; and
(iii) a neutralized sulfonated 'oxidation catalyst' carrying comonomer..

In accordance with the present invention, there is provided a process for preparation of a a neutralized sulfonated 'oxidation catalyst' carrying comonomer that comprises:
- dissolving a sulfonated dicarboxylic acid or a corresponding ester thereof in a 'diol to form a solution;
- adding a cobalt acetate to the solution to form a reaction mixture; i
- heating the reaction mixture at a temperature in the range of about 20 to 140 °C while employing a condenser to collect acetic acid as the byproduct to obtain a neutralized cobalt containing co-monomer.

Typically, the sulfonated dicarboxylic acid is 5, sulfo dimethylisophthalate (having the structure: H⁺SO₃⁻-C₆H₃O₄). Typically, the diol is ethylene glycol,

Furthermore, there is provided in accordance with the present invention, a preform made from the oxygen scavenging composition of the present invention.

Still furthermore, there is provided in accordance with the present invention, a monolayer bottle blown from the oxygen scavenging composition of the present invention.

Also, the present invention provides a packaging article made from the oxygen scavenging composition of the present invention, wherein the oxygen transmission rate (OTR) of the article is less than 0.3 cc.m⁻²day⁻¹ at 0.36 mm thickness of the wall of the packaging article.

In accordance with one of the embodiments of the present invention, the oxygen transmission rate (OTR) of the packaging article made from the oxygen scavenging composition of the present invention is less than 0.2 cc.m⁻²day⁻¹ at 0.36 mm thickness.

The composition of the invention can optionally blended with other polymers and additives can be formed into various beverages and foods packages having oxygen barrier activity. One or more of the processes such as chips-drying, injection molding, stretch blow molding, extrusion blowing etc. can be employed for making these packages.

The oxygen scavenging composition of the present invention is useful for manufacture of packaging materials and articles, bottles for an example or any other format of packaging, in single layer or as one (or more) layer(s) of a multilayer packaging, typically meant for oxygen-sensitive substances, especially food and beverage (F&B). The oxygen scavenging composition in accordance with the present invention has an ability to consume an amount of oxygen and thereby deplete the level of the same from the immediate atmosphere surrounding the packaged content and at ambient temperatures.

The invention is further illustrated by way of the following non limiting examples.

### Examples

In the examples and the results that follow, the metal content of the samples was calculated from the amount added during polymerization and from the loading of the copolymerization product during injection molding. Similarly, MXD6 content of the samples was calculated from the loading of the MXD6 chips during injection molding. Intrinsic viscosity (IV) was obtained according to ASTM D4603-03 using 0.5 g/cc solution of the polymer in phenol-tetrachloroethane solvent (60:40 wt ratio, 30 °C).

Oxygen transmission rate (OTR) was determined for the 0.36 mm thick film cut out from the bottle using Mocon Ox-Tran 2/21 modular system at 23 °C and at 752 mmHg pressure. A mixture of 98% nitrogen and 2% hydrogen was used as carrier gas and 100% oxygen was used as the test gas.

Intrinsic viscosity (IV) was obtained according to ASTM D4603-03 using 0.5 g/cc solution of the polymer in phenol-tetrachloroethane solvent (60:40 wt ratio, 30 °C).

### Example 1: Synthesis of Cobalt containing comonomer

128.9 g of 5, sulfo dimethylisophthalate (having the structure: H⁺SO₃⁻- C₆H₃O₄) was dissolved in 2222.7 g ethylene glycol (EG). 58.58 g of Cobalt acetate (CoAc₂.4H₂O) was added and heated for 1 hr from 20 to 140 °C while employing a condenser to collect the by product acetic acid, leaving cobalt sulphonate of dimethylisophthalate (CoSIPM₂) solution in EG. The completion of the reaction was indicated from an increase in pH to about 4, indicating acidity.

### Example 2: Preparation of Cobalt copolymer

Slurry of purified terephthalic acid (6 kg) in ethylene glycol (4.5 kg) was esterified at 2 bar nitrogen pressure by gradual heating in a 10 L electrically heated stainless steel autoclave equipped with a reflux column and condenser to remove the condensate, primarily water and excess EG. When the temperature reached 260 °C in about 3.5 hr, the polymerization vessel was vented to depressurize to atmospheric pressure, and the Co-SIPM₂ solution of Example 1 (containing 13.88 g Co) was added to the molten esterification product under stirring, when quick devolatilization of the added EG was reflected in rise of the reflux column temperature to about 180 °C. After an interval of 20 minutes, antimony trioxide catalyst (300 ppm Sb in PET) dissolved in ethylene glycol 250 ml was added. The mixture temperature was increased to ∼ 285 °C, while gradually reducing the pressure over 45 minutes to 1 mm of Hg to obtain the polymeric product. The copolymer product was extruded out of the reactor in the form of a strand, quenched in a water bath and sliced into chips containing 2000 ppm of cobalt. The I.V. and DEG of the copolymer were 0.43 and 5.5%. Thus, DEG was found to be only marginally more than the corresponding DEG obtained in case of an alkali metal sulfonate, [prepared in Example 8]

### Example 3: SSP of Cobalt copolymer

The copolymer chips of example 4 were crystallized at 140 °C in air oven, and then subjected to SSP at 200 °C for 32 hr to raise the intrinsic viscosity to 0.70.

### Example 4 : Manufacture of barrier polyester bottles with 200 ppm Co

0.8 kg of the copolymer chips of example 6, and 0.4 kg of MXD6 chips and 6.8 kg of base polyester (poly(ethylene terephthalate-co-ethylene isophthalate), IV = 0.80 dL/g, containing 35 ppm Cobalt due addition of cobalt acetate during polymerization as color toner) were tumble mixed, dried at 150 °C for 6 hr, and injection molded using 2 \ cavity Arburg injection molding machine (Model Allrounder 420C) operated at cylinder temperature of 275-280 °C and runner temperature of 290-287 °C, into 48 g perform. These performs were blown into bottles of 1.5 L volume using SIDEL SB01 single cavity blow molding machine. The OTR value was found to be 0.03 cm³.m⁻²day⁻¹ measured for film thickness of 0.28 mm.

### Example 5: Manufacture of barrier polyester bottles with 50 ppm Co

0.2 kg of the sulfonated copolymer chips of example 6, and 0.4 kg of MXD6 chips and 7.4 kg of base polyester (poly(ethylene terephthalate-co-ethylene isophthalate), IV = 0.80 dL/g, containing 35 ppm Cobalt due addition of cobalt acetate during polymerization as color toner) were tumble mixed, dried at 150 °C for 6 hr, and injection molded using 2 cavity Arburg injection molding machine (Model Allrounder 420C) operated at cylinder temperature of 275-280 °C and runner temperature of 290-287 °C, into 48 g perform. These performs were blown into bottles of 1.5 L volume using SIDEL SB01 single cavity blow molding machine. The OTR value was found to be 0.015 cm³.m⁻²day⁻¹ measured for film thickness of 0.28 mm.

### Example 6 : Manufacture of 'control' polyester bottles without MXD6

8 kg of base polyester (poly(ethylene terephthalate-co-ethylene isophthalate), IV = 0.80 dL/g, containing 35 ppm Cobalt due addition of cobalt acetate during polymerization as color toner) were dried at 150 °C for 6 hr, and injection molded using 2 cavity Arburg injection molding machine (Model Allrounder 420C) operated at cylinder temperature of 275-280 °C and runner temperature of 290-287 °C, into 48 g perform. These performs were blown into bottles of 1.5 L volume using SIDEL SB01 single cavity blow molding machine. The OTR value was found to be 6.9 cm³.m⁻²day⁻¹ measured for film thickness of 0.28 mm.

### Example 7 : Manufacture of polyester bottles with MXD6

0.4 kg of MXD6 chips and 7.6 kg of base polyester (poly(ethylene terephthalate-co- ethylene isophthalate), IV = 0.80 dL/g, containing 35 ppm Cobalt due addition of cobalt acetate during polymerization as color toner) were tumble mixed, dried at 150 °C for 6 hr, and injection molded using 2 cavity Arburg injection molding machine (Model All rounder 420C) operated at cylinder temperature of 275-280 °C and runner temperature of 290-287 °C, into 48 g perform. These performs were blown into bottles of 1.5 L volume using SIDEL SB01 single cavity blow molding machine. The OTR value was found to be 2.08 cm³.m⁻²day⁻¹ measured for film thickness of 0.28 mm. This corresponds to only a ∼3X decrease in oxygen permeability, indicating that cobalt added as cobalt acetate during polymerization is not effective as scavenger catalyst.

The comparative reduction in OTR in case of films prepared with and without MXD6 vis a vis the OTR of the bottle prepared in accordance with the present invention is provided in Table 1 provided below. Table 1.

| Sr. No | Film Make (Standard Film Thickness of 0.28mm) | OTR **(cm³.m⁻².day⁻¹)** | OTR Reduction |
|---|---|---|---|
| 1 | Example 6 (Without MXD6) | **6.9** | - Control. |
| 2 | Example 7 (With MXD6 + Cobalt Acetate) | **2.08** | -3 fold decrease. |
| 3 | Example 4 (In accordance with the Present Invention: Co 200ppm) | **0.03** | More than 100-fold decrease |
| 4 | Example 5 (In accordance with the Present Invention: Co 50ppm) | **0.015** | More than 100 fold decrease: |

More than 100 fold reduction in OTR, with respect to the OTR prepared in example 6 (Without MXD6) observed in case of the films prepared in accordance with the present invention. This shows that the polymer-bound cobalt in the oxygen scavenging composition of the present invention is an active and effective metal oxidation catalyst.

Furthermore, from the findings in case of example 7, wherein Cobalt acetate was present without additional Co-sulfonate oxidation metal catalyst, it was found that it did not show the desired metal oxidation catalytic activity.

For comparative purposes, the present inventors also prepared a copolymer containing alkali metal sulfonate, a copolymer containing Zinc sulfonate in order to arrive at the copolymer containing cobalt sulfonate with desired catalytic activity.

### Example 8: Preparation of copolymer containing alkali metal sulfonate

Slurry of purified terephthalic acid (6 kg) in ethylene glycol (4.5 kg) was esterified at 2 bar nitrogen pressure by gradual heating in a 10 L electrically heated stainless steel autoclave equipped with a reflux column and condenser to remove the condensate, primarily water and excess EG. When the temperature reached 260 °C in about 3.5 hr, glycol ester of Na-SIPM (containing 0.140 kg Na-SIPM) dissolved in ethylene glycol to obtain pH neutral solution that was added to the molten esterification product under stirring under the existing pressure by employing an intermediate pressurized vessel. After an interval of 20 minutes, antimony trioxide catalyst (300 ppm Sb in PET) dissolved in ethylene glycol 250 ml was added. The mixture temperature was increased to ∼ 285 °C, while gradually reducing the pressure over 45 minutes to 1 mm of Hg to obtain the polymeric product. The copolymer product was extruded out of the reactor (in the form of a strand, quenched in a water bath and sliced into chips containing 1500 ppm of sodium. The FV and diethylene glycol (DEG) of the copolymer were 0.50 and 4.5% respectively. The somewhat high level of DEG (as compared to standard < 2%) is related to employing batch process without heel.

**Table 2.**

| Copolymer type | Compatibilizing activity - | Oxidation catalytic activity | Metal content ppm | DEG % | I.V |
|---|---|---|---|---|---|
| Copolymer containing Na-sulfonate | Yes | No | 1500 | 4.5% | 0.50 |

The alkali metal sulfonate is used as a compatibilizer and it does not show any catalytic activity. For catalytic activity, a polymer-bound cobalt sulfonate was prepared.

Accordingly, cobalt sulfonate salt was prepared using the process as used for preparation of a co-polymer containing sodium sulfonate except that cobalt sulfonate salt was used in place of sodium sulfonate.

### Example 9: Preparation of Cobalt copolymer by standard process

Slurry of purified terephthalic acid (6 kg) in ethylene glycol (4.5 kg) was esterified at 2 bar nitrogen pressure by gradual heating in a 10 L electrically heated stainless steel autoclave equipped with a reflux column and condenser to remove the condensate, primarily water and excess EG. When the temperature reached 260 °C in about 3.5 hr, the Co-SIPM₂ solution of Example 1 (containing 13.88 g Co) was added to the molten esterification product under stirring under the existing pressure by employing an intermediate pressurized vessel. After an interval of 20 minutes, antimony trioxide catalyst (300 ppm Sb in PET) dissolved in ethylene glycol 250 ml was added. The mixture temperature was increased to ∼ 285 °C, while gradually reducing the pressure over 45 minutes to 1 mm of Hg to obtain the polymeric product. The copolymer product was extruded out of the reactor in the form of a strand, quenched in a water bath and sliced into chips containing 2000 ppm of cobalt. The IV and DEG of the copolymer were 0.437 and 10.2% respectively.

High level of DEG formation, promoted by acidity, if present in reaction mixture containing high EG, is known to adversely affect the thermomechanical properties of the containers made therefrom.

**Table 3**

| **Copolymer Type** | **Compatibilizing activity** | **Oxidation catalytic activity** | **Metal content ppm** | **DEG%** | **I.V.** |
|---|---|---|---|---|---|
| Copolymer containing Co-sulphonate (Prepared using known process for alkali metal sulphonate) | Yes | Yes | 2000 | 10.2% (unacceptable) | 0.437 |

High level of DEG formation, promoted by acidity of reaction mixture containing high EG, is known to adversely affect the thermomechanical properties of the containers made therefrom. Because of this, the Co-SIPA prepared in accordance with the procedure in this example (9) was found to be unacceptable for the manufacture of oxygen scavenging composition of the present invention.

In order to overcome the problem of formation unacceptable levels of DEG in the cobalt sulfonate polymer, the inventors of the present invention devised a process for preparation of polymer bound cobalt wherein the DEG content is about 5.5%. [Example 2]

**Table 4**

| Co-polymer type | Compatibilizing activity | Oxidation catalytic activity | Metal content ppm | DEG % | I.V |
|---|---|---|---|---|---|
| Co-polymer containing Co-sulfonate (Prepared using process in accordance with the present invention. [Example 2 ] | Yes | Yes | 2000 | 5.5% | 0.43 |

### Example 10: Preparation of Zn-SIPM polymer product

Slurry of purified terephthalic acid (6 kg) in ethylene glycol (4.5 kg) was esterified at 2 bar nitrogen pressure by gradual heating in a 10 L electrically heated stainless steel autoclave equipped with a reflux column and condenser to remove the condensate, primarily water and excess EG. When the temperature reached 260 °C in about 3.5 hr, the polymerization vessel was vented to depressurize to atmospheric pressure, and the Zn- SIPM solution (containing 7 g Zn) was added to the molten esterification product under stirring, when quick devolatilization of the added EG was reflected in rise of the reflux column temperature to about 180 °C. After an interval of 20 minutes, antimony trioxide catalyst (300 ppm Sb in PET) dissolved in ethylene glycol 250 ml was added. The mixture temperature was increased to ∼ 285 °C, while gradually reducing the pressure over 45 minutes to 1 mm of Hg. No Torque rise was observed even after 140 min at this low pressure, indicating that the high level of Zn required in the copolymer for potential use as masterbatch interferes with the polymerization process.

**Table 5**

| Co-polymer type | Compatibilizing activity | Oxidation catalytic activity | Metal content ppm | DEG % | I.V |
|---|---|---|---|---|---|
| Co-polymer containing Zinc-sulfonate (Prepared using known process) | Copoymer with desired Zinc content could not be prepared since it interfered with the polymerization process. | | | | |

It was found out that copolymer containing Zinc-SIPA can not be adapted to be used as polymer bound metal catalyst since it was not possible to prepare a Co-polymer with Zinc with enough metal content required (at least when used as masterbatch with let down ratio LDR upto 5%) for providing the desired oxidation catalytic activity.

Other problems encountered in preparing a polymer-bound zinc oxidation catalyst were that as the metal content of Zinc in the co-polymer increases, it imparts yellowish color to the composition which is undesirable. This problem has been reported in EP 1663630, (Example No 6).

While considerable emphasis has been placed herein on the specific ingredients of the preferred formulation, it will be appreciated that many additional ingredients can be added and that many changes can be made in the preferred formulation without departing from the principles of the invention. These and other changes in the preferred formulation of the invention will be apparent to those skilled in the art from the disclosure herein, whereby it is to be distinctly understood that the foregoing descriptive matter is to be interpreted merely as illustrative of the invention and not as a limitation.

## Claims

1. An oxygen scavenging composition, comprising the following components:
(A) a polyester component;
(B) an organic oxidizable polymeric component; and
(C) a polymer-bound oxidation catalyst bearing component
wherein component C essentially comprises a neutralized sulfonated oxidation catalyst carrying comonomer, said comonomer is prepared from an acid and an alcohol, said acid being selected from the group consisting of sulfophthalic acid, sulfoterephthalic acid, sulfoisophthalic acid, 4-sulfonaphthalene-2, 7-dicarboxylic acid, said alcohol being selected from the group consisting of group of ethylene glycol, propylene glycol, 1,3 propane diol, 1,4 butanediol, 1,6 hexane diol, 1,8-octanediol, wherein 0.01 to 1 mole fraction of the total neutralized sulfonated oxidation catalyst carrying comonomer is neutralized by Co metal in its positive oxidation state (Co²⁺).

2. An oxygen scavenging composition as claimed in claim 1, wherein the polyester component comprises a polyester obtained by copolymerizing:
a) at least one member selected from the group of aromatic dicarboxylic acids consisting of terephthalic acid, isophthalic acid, succinic acid, glutaric acid, adipic acid, sebacic acid, naphthalene dicarboxylic acid and cyclohexane dicarboxylic acid or the corresponding diester with a lower alcohol and their ester forming derivatives;
b) at least one member selected from the group of aliphatic diols consisting of ethylene glycol, propylene glycol, 1,3 -propanediol, 1,4-butanediol, 1,6- hexane diol, 1,8-octanediol, 1,10 decanediol, 2,2-dimethyl-1,3-propanediol, 1 ,4-cyclohexane dimethanol, 1,4-cyclohexane diol, cyclobutanediol, cyclobutane dimethanol, tetramethane cyclobutanediol, diethylene glycol, polyethylene glycol, polypropylene glycol, polytetramethylene glycol and their ester forming derivatives.

3. An oxygen scavenging composition as claimed in claim 1, wherein the polyester component comprises a homopolymeric condensate of polyethylene terephthalate.

4. An oxygen scavenging composition as claimed in claim 1, wherein the polyester component is a homopolymeric condensate of polyethylene terephthalate that comprises ethylene isophthalate, the amount of ethylene isophthalate being less than 2.5%.

5. An oxygen scavenging composition as claimed in claim 1, wherein the organic oxidizable polymeric component is at least one selected from the group consisting of:
(i) a copolymer of m-xylenediamine and adipic acid (MXD6) comprising those containing repeating units of the generic formula NH-CH₂-arylene-CH₂-NH-CO-alkylene-CO- wherein the preferred arylene groups are of phenylene type, particular m-phenylene, which may be substituted with alkyl groups and/or condensed with other substituted or unsubstituted aromatic rings and the preferred alkylene moieties are composed of between 1 and 10 carbon atoms, preferably n-butylene,
(ii) a fully aliphatic poly-amide comprising repeating units of the general formula - CO(CH₂)ₙCONH(CH₂)ₘNH- or (CH₂)_{P}CONH- wherein any of n, m or p can be integers between 3 and 7, preferably between 4 and 6; and
(iii) a co-polyester, derived from hydroxyl- or carboxyl-terminated monomeric, oligomeric or polymeric olefin or olefin oxide segments capable of oxygen scavenging, constituted by at least one member selected from the group consisting of a dicarboxylic, hydroxy-carboxylic or dihydroxy compound comprising at least one olefinic unsaturation, wherein the number average molecular weight of such olefin-containing condensate segment is between 100 and 50,000, preferably between 500 and 5000 and most preferably between 1000 to 3000.

6. An oxygen scavenging composition as claimed in claim 1, wherein the oxidation catalyst bearing component is a polar co-polyester synthesized by co- polymerizing :
(i) at least one member selected from the group of aromatic dicarboxylic acids consisting of terephthalic acid, isophthalic acid, succinic acid, glutaric acid, adipic acid, sebacic acid, naphthalene dicarboxylic acid and cyclohexane dicarboxylic acid, the corresponding diester with a lower alcohol and their ester forming derivatives;
(ii) at least one member selected from the group of aliphatic diols consisting of ethylene glycol, propylene glycol, 1,3 -propanediol, 1,4-butanediol, 1,6-hexane diol, 1,8-octane diol, 1,10 decanediol, 2,2-dimethyl-1,3-propanediol, 1,4- cyclohexane dimethanol, 1,4-cyclohexane diol, cyclobutanediol, cyclobutane dimethanol, tetramethane cyclobutanediol, diethylene glycol, polyethylene glycol, polypropylene glycol, polytetramethylene glycol and their ester forming derivatives; and
(iii) a neutralized sulfonated oxidation catalyst carrying comonomer.

7. An oxygen scavenging composition as claimed in claim 1, wherein the cobalt content of the oxidation catalyst bearing component is greater than 1000ppm.

8. An oxygen scavenging composition as claimed in claim 1, wherein the DEG content of the oxidation catalyst bearing component is less than 6 mole %.

9. An oxygen scavenging composition as claimed in claim 1, wherein the intrinsic viscosity of the polyester component is in the range of 0.7 to 0.85.

10. An oxygen scavenging composition as claimed in claim 1, wherein the proportion of the polyester component in the composition is in the range of 85 % to 99% with respect to the mass of the composition.

11. An oxygen scavenging composition as claimed in claim 1, wherein the polar oxidation catalyst bearing component is a copolymer of terephthalic acid ethylene glycol and Co-bis(5-sulfoisophthalic acid) or corresponding dimethyl or di-glycolate ester.

12. An oxygen scavenging composition as claimed in claim 1, wherein the intrinsic viscosity (IV) of component C is in the range of 0.4 to 0.85.

13. An oxygen scavenging composition as claimed in claim 1, wherein the amount of cobalt metal present in the composition is in the range of 10 to 1000 ppm.

14. A perform made from the oxygen scavenging composition as claimed in claim 1.

15. A monolayer bottle blown from the oxygen scavenging composition as claimed in claim 1.

16. A packaging article made from the oxygen scavenging composition as claimed in claim 1, wherein the oxygen transmission rate (OTR) of the article is less than 0.2 cc.m⁻²day⁻¹ at 0.36 mm thickness.

17. A process of preparing a neutralized sulfonated oxidation catalyst carrying comonomer of any preceding claim, said process comprising:
- dissolving a sulfonated dicarboxylic acid or a corresponding ester thereof in a diol to form a solution;
- adding a cobalt acetate to the solution to form a reaction mixture;
- heating the reaction mixture at a temperature in the range of 20 to 140°C, while employing a condenser to collect acetic acid as the byproduct to obtain a neutralized sulfonated oxidation catalyst carrying comonomer.

## Patentansprüche

1. Eine sauerstoffzehrende Zusammensetzung, die folgenden Komponenten umfasst:
(A) eine Polyester-Komponente;
(B) eine organische oxidierbare Polymerkomponente; und
(C) eine polymergebundene oxidationskatalysator-tragende Komponente
worin Komponente C im Wesentlichen einen neutralisierten sulfonierten Oxidationskatalysator umfasst, der Comonomer trägt, wobei das Comonomer aus einer Säure und einem Alkohol hergestellt ist, wobei die Säure aus der Gruppe bestehend aus Sulfophthalsäure, Sulfoterephthalsäure, Sulfoisophthalsäure, 4-Sulfonaphthalin-2,7-dicarbonsäure ausgewählt wird, der Alkohol wird aus der Gruppe bestehend aus Ethylenglykol, Propylenglykol, 1,3-Propandiol, 1,4-Butandiol, 1,6-Hexandiol, 1,8-Octandiol ausgewählt, wobei 0.01 bis 1 Molanteil des gesamten neutralisierten sulfonierten Oxidationskatalysators, der Comonomer trägt, durch Co-Metall in seiner positiven Oxidationsstufe (Co²+) neutralisiert wird.

2. Eine sauerstoffzehrende Zusammensetzung nach Anspruch 1, wobei die Polyesterkomponente einen durch Copolymerisation gewonnenen Polyester umfasst:
a) mindestens ein Mitglied, ausgewählt aus der Gruppe der aromatischen Dicarbonsäuren, bestehend aus Terephthalsäure, Isophthalsäure, Bernsteinsäure, Glutarsäure, Adipinsäure, Sebacinsäure, Naphthalindicarbonsäure und Cyclohexandicarbonsäure oder dem entsprechenden Diester mit einem niederen Alkohol und deren esterbildenden Derivaten;
b) mindestens ein Mitglied, ausgewählt aus der Gruppe der aliphatischen Diole, bestehend aus Ethylenglykol, Propylenglykol, 1,3-Propandiol, 1,4-Butandiol, 1,6-Hexandiol, 1,8-Octandiol, 1,10-Dekandiol, 2,2-Dimethyl-1,3-Propandiol, 1,4-Cyclohexandimethanol, 1,4-Cyclohexandiol, Cyclobutandiol, Cyclobutandimethanol, Tetramethancyclobutandiol, Diethylenglykol, Polyethylenglykol, Polypropylenglykol, Polytetramethylenglykol und deren esterbildende Derivate.

3. Eine sauerstoffzehrende Zusammensetzung nach Anspruch 1, wobei die Polyesterkomponente ein homopolymeres Kondensat von Polyethylenterephthalat umfasst.

4. Eine sauerstoffzehrende Zusammensetzung nach Anspruch 1, wobei die Polyesterkomponente ein homopolymeres Kondensat von Polyethylenterephthalat ist, das Ethylenisophthalat umfasst, wobei die Menge an Ethylenisophthalat weniger als 2,5 % beträgt.

5. Eine sauerstoffzehrende Zusammensetzung nach Anspruch 1, wobei die organische oxidierbare polymere Komponente mindestens eine aus der Gruppe ist, die besteht aus:
(i) ein Copolymer aus m-Xylendiamin und Adipinsäure (MXD6), umfassend solche, die wiederkehrende Einheiten der allgemeinen Formel NH-CE₂-arylen-CE₂-NH-CO- Alkylen-COenthalten, wobei die bevorzugten Arylengruppen vom Phenylentyp, insbesondere m-Phenylen, sind, die mit Alkylgruppen substituiert und/oder mit anderen substituierten oder unsubstituierten aromatischen Ringen kondensiert sein können und die bevorzugten Alkyleneinheiten aus 1 bis 10 Kohlenstoffatomen, vorzugsweise n-Butylen, bestehen,
(ii) ein vollaliphatisches Polyamid, umfassend wiederkehrende Einheiten der allgemeinen Formel - CO(CH₂)ₙCONH(CH₂)ₘ-NH oder (CH₂)ₚCONH- wobei n, m oder p ganze Zahlen zwischen 3 und 7 sein können, vorzugsweise zwischen 4 und 6; und
(iii) einen Copolyester, abgeleitet von monomeren, oligomeren oder polymeren Olefin- oder Olefinoxid-Segmenten mit Hydroxyl- oder Carboxyl-Terminus, die in der Lage sind, Sauerstoff abzufangen, bestehend aus mindestens einem Mitglied, ausgewählt aus der Gruppe, bestehend aus einer Dicarbonsäure, Hydroxycarbonsäure- oder Dihydroxyverbindung, die mindestens eine olefinischeUngesättigtheit umfasst, wobei das zahlenmittlere Molekulargewicht eines solchen olefinhaltigenKondensatsegments zwischen 100 und 50.000, vorzugsweise zwischen 500 und 5000 und am meisten bevorzugt zwischen 1000 und 3000 liegt.

6. Eine sauerstoffzehrende Zusammensetzung nach Anspruch 1, wobei die Oxidationskatalysator tragende Komponente ein polarer Co-Polyester ist, der durch Co-Polymerisation hergestellt wird:
(i) mindestens ein Mitglied, ausgewählt aus der Gruppe der aromatischen Dicarbonsäuren, bestehend aus Terephthalsäure, Isophthalsäure, Bernsteinsäure, Glutarsäure, Adipinsäure, Sebacinsäure, Naphthalindicarbonsäure und Cyclohexandicarbonsäure oder dem entsprechenden Diester mit einem niederen Alkohol und deren esterbildenden Derivaten;
(ii) mindestens ein Mitglied, ausgewählt aus der Gruppe der aliphatischen Diole, bestehend aus Ethylenglykol, Propylenglykol, 1,3-Propandiol, 1,4-Butandiol, 1,6-Hexandiol, 1,8-Octandiol, 1,10-Dekandiol, 2,2-Dimethyl-1,3-Propandiol, 1,4-Cyclohexandimethanol, 1,4-Cyclohexandiol, Cyclobutandiol, Cyclobutandimethanol, Tetramethancyclobutandiol, Diethylenglykol, Polyethylenglykol, Polypropylenglykol, Polytetramethylenglykol und deren esterbildende Derivate; und
(iii) einen neutralisierten sulfonierten Oxidationskatalysator, der Comonomer trägt.

7. Eine sauerstoffzehrende Zusammensetzung nach Anspruch 1, wobei der Kobaltgehalt der den Oxidationskatalysator tragenden Komponente größer als 1000ppm ist.

8. Eine sauerstoffzehrende Zusammensetzung nach Anspruch 1, wobei der DEG-Gehalt der den Oxidationskatalysator tragenden Komponente weniger als 6 Mol-% beträgt.

9. Eine sauerstoffzehrende Zusammensetzung nach Anspruch 1, wobei die intrinsische Viskosität der Polyesterkomponente im Bereich von 0,7 bis 0,85 liegt.

10. Eine sauerstoffzehrende Zusammensetzung nach Anspruch 1, wobei der Anteil der Polyesterkomponente in der Zusammensetzung im Bereich von 85 % bis 99 %, bezogen auf die Masse der Zusammensetzung, liegt.

11. Eine sauerstoffzehrende Zusammensetzung nach Anspruch 1, wobei die Komponente, die den polaren Oxidationskatalysator trägt, ein Copolymer aus Terephthalsäureethylenglykol und Co-bis(5-Sulfoisophthalsäure) oder ein entsprechender Dimethyl- oder Di-Glycolatester ist.

12. Eine sauerstoffzehrende Zusammensetzung nach Anspruch 1, wobei die intrinsische Viskosität (IV) der Komponente C im Bereich von 0,4 bis 0,85 liegt.

13. Eine sauerstoffzehrende Zusammensetzung nach Anspruch 1, wobei die Menge des in der Zusammensetzung vorhandenen Kobaltmetalls im Bereich von 10 bis 1000 ppm liegt.

14. Eine Leistung aus der sauerstoffzehrenden Zusammensetzung nach Anspruch 1.

15. Monolayer-Flasche, die aus der sauerstoffzehrenden Zusammensetzung nach Anspruch 1 geblasen wird.

16. Ein Verpackungsgegenstand, hergestellt aus der sauerstoffzehrenden Zusammensetzung nach Anspruch 1, wobei die Sauerstoffdurchlässigkeitsrate (OTR) des Gegenstandes weniger als 0,2 cc.m⁻²day⁻¹ bei 0,36mm Dicke beträgt.

17. Verfahren zur Herstellung eines neutralisierten sulfonierten Oxidationskatalysators, der Comonomer eines beliebigen vorhergehenden Anspruchs trägt, wobei das Verfahren umfasst:
- Lösen einer sulfonierten Dicarbonsäure oder eines entsprechenden Esters davon in einem Diol, um eine Lösung zu bilden;
- Zugabe eines Kobaltacetats zu der Lösung, um ein Reaktionsgemisch zu bilden;
- Erhitzen des Reaktionsgemisches auf eine Temperatur im Bereich von 20 bis 140°C, wobei ein Kondensator verwendet wird, um Essigsäure als Nebenprodukt zu sammeln, um einen neutralisierten sulfonierten Oxidationskatalysator zu erhalten, der Comonomer trägt.

## Revendications

1. Composition de la récupération d'oxygène, comprenant les composants suivants :
(A) un composant polyester ;
(B) un composant polymère organique oxydable ; et
(C) un composant de catalyseur d'oxydation liéà un polymère portant un composant de catalyseur d'oxydation
dans laquelle le composant C comprend essentiellement un catalyseur d'oxydation sulfoné neutralisé portant un comonomère, ledit comonomère est préparé à partir d'un acide et d'un alcool, ledit acide étant choisi dans le groupe constitué par l'acide sulfophtalique, l'acide sulfotéréphtalique, acide sulfoisophtalique, 4- sulfonaphtalène-2, acide 7-dicarboxylique, ledit alcool étant choisi dans le groupe consistant en éthylène glycol, propylène glycol, 1,3 propane diol, 1,4 butanediol, 1,6 hexane diol, 1,8- octanediol, où 0.01 à 1 fraction molaire du catalyseur d'oxydation sulfoné neutralisé portant le comonomère est neutralisé par le Co métal dans son état d'oxydation positif (Co²+).

2. Composition de récupération d'oxygène selon la demande de la revendication 1, dans laquelle le composant polyester comprend un polyester obtenu par copolymérisation :
a) au moins un élément choisi dans le groupe des acides dicarboxyliques aromatiques constitué d'acide téréphtalique, acide isophtalique, acide succinique, acide glutarique, acide adipique, acide sébacique, acide naphtalène dicarboxylique et acide cyclohexane dicarboxylique ou le diester correspondant avec un alcool inférieur et leurs dérivés formateurs d'esters ;
b) au moins un élément choisi dans le groupe des diols aliphatiques constitué par l'éthylène glycol, le propylène glycol, le 1,3 -propanediol, le 1,4-butanediol, le 1,6-hexane diol, le 1,8-octanediol, le 1,10 décanediol, le 2,2-diméthyl-1,3-propanediol, le 1 ,4-cyclohexane diméthanol, 1,4-cyclohexane diol, cyclobutanediol, cyclobutanediol, cyclobutane diméthanol, tétraméthane cyclobutanediol, diéthylène glycol, polyéthylène glycol, polypropylène glycol, polytétraméthylène glycol et leurs dérivés formant des esters.

3. Composition de récupération d'oxygène selon la revendication 1, dans laquelle le composant polyester comprend un condensat homopolymère de polyéthylène téréphtalate.

4. Composition de récupération d'oxygène selon la revendication 1, dans laquelle le composant polyester est un condensat homopolymère de polyéthylène téréphtalate qui comprend de l'isophtalate d'éthylène, la quantité d'isophtalate d'éthylène étant inférieure à 2,5 %.

5. Composition de récupération d'oxygène selon la revendication 1, dans laquelle le composant polymère organique oxydable est au moins un composant choisi dans le groupe consistant en :
(i) un copolymère de m-xylènediamine et acide adipique (MXD6) comprenant ceux contenant des motifs répétitifs de formule générique NH-CH₂-arylène-CH₂-NH-CO- alkylène-CO- dans laquelle les groupes arylène préférés sont de type phénylène, en particulier m-phénylène, qui peuvent être substitués par des groupes alkyle et/ou condensés avec d'autres cycles aromatiques substitués ou non substitués et les fragments alkylène préférés sont composés de 1 à 10 atomes de carbone, de préférence de n-butylène,
(ii) un poly-amide entièrement aliphatique comprenant des motifs répétitifs de formule générale -CO(CH₂)nCONH(CH₂)mNH- ou (CH₂)pCONH- dans laquelle n, m ou p peuvent être des nombres entiers compris entre 3 et 7, de préférence entre 4 et 6 ; et
(iii) un copolyester, dérivé de segments monomères, oligomères ou polymères d'oléfines ou d'oxydes d'oléfines à terminaison hydroxyle ou carboxyle, capables de piégeage de l'oxygène, constitué par au moins un élément choisi dans le groupe constitué par un dicarboxylique, composé hydroxy-carboxylique ou dihydroxy comprenant au moins une insaturation oléfinique, dans lequel le poids moléculaire moyen en nombre d'un tel segment de condensat contenant une oléfine est compris entre 100 et 50 000, de préférence entre 500 et 5000 et de préférence entre 1000 et 3000.

6. Composition de récupération d'oxygène selon la revendication 1, dans laquelle le composant portant le catalyseur d'oxydation est un co-polyester polaire synthétisé par co-polymérisation.
(i) au moins un élément choisi dans le groupe des acides dicarboxyliques aromatiques constitué d'acide téréphtalique, acide isophtalique, acide succinique, acide glutarique, acide adipique, acide sébacique, acide naphtalène dicarboxylique et acide cyclohexane dicarboxylique ou le diester correspondant avec un alcool inférieur et leurs dérivés formateurs d'esters ;
(ii) au moins un élément choisi dans le groupe des diols aliphatiques constitué par l'éthylène glycol, le propylène glycol, le 1,3 -propanediol, le 1,4-butanediol, le 1,6-hexane diol, le 1,8-octane diol, le 1,10 décanediol, le 2,2-diméthyl-1,3-propanediol, le 1,4-cyclohexane diméthanol, le 1,4-cyclohexane diol, cyclobutanediol, cyclobutane diméthanol, tétraméthane cyclobutanediol, diéthylène glycol, polyéthylène glycol, polypropylène glycol, polytétraméthylène glycol et leurs dérivés formant des esters ; et
(iii) un catalyseur d'oxydation sulfoné neutralisé portant un comonomère.

7. Composition de récupération de l'oxygène selon la revendication 1, dans laquelle la teneur en cobalt du composant portant le catalyseur d'oxydation est supérieure à 1000 ppm.

8. Composition de récupération d'oxygène selon la revendication 1, dans laquelle la teneur en DEG du composant portant le catalyseur d'oxydation est inférieure à 6 % en moles.

9. Composition de récupération d'oxygène selon la revendication 1, dans laquelle la viscosité intrinsèque du composant polyester se situe dans la plage de 0,7 à 0,85.

10. Composition de récupération d'oxygène selon la revendication 1, dans laquelle la proportion du composant polyester dans la composition se situe dans la plage de 85 % à 99 % par rapport à la masse de la composition.

11. Une composition de récupération d'oxygène selon la revendication 1,dans laquelle le composant portant le catalyseur d'oxydation polaire est un copolymère d'acide téréphtalique, d'éthylène glycol et de Co-bis (5-acide sulfoisophtalique) ou d'ester diméthylique ou di-glycolate correspondant.

12. Composition de récupération d'oxygène selon la revendication 1, dans laquelle la viscosité intrinsèque (IV) du composant C se situe dans la plage de 0,4 à 0,85.

13. Composition de récupération d'oxygène selon la revendication 1, dans laquelle la quantité de cobalt métal présent dans la composition est dans la plage de 10 à 1000 ppm.

14. Performances réalisées à partir de la composition de récupération de l'oxygène telle que décrite dans la revendication 1.

15. Performances réalisées à partir de la composition de récupération de l'oxygène telle que décrite dans la revendication 1.

16. Article d'emballage fabriquéà partir de la composition de récupération de l'oxygène selon la revendication 1, dans lequel le taux de transmission de l'oxygène (OTR) de l'article est inférieur à 0,2 cc.m⁻²jour⁻¹ à 0,36 mm d'épaisseur.

17. Procédé de préparation d'un catalyseur d'oxydation sulfoné neutralisé portant un comonomère de n'importe quelle revendication précédente, ledit procédé comprenant :
- la dissolution d'un acide dicarboxylique sulfoné ou d'un ester correspondant à celui-ci dans un diol pour former une solution ;
- ajouter un acétate de cobalt à la solution pour former un mélange réactionnel ;
- chauffage du mélange réactionnel à une température comprise entre 20 et 40 °C, tout en utilisant un condenseur pour recueillir l'acide acétique comme sous-produit afin d'obtenir un catalyseur d'oxydation sulfoné neutralisé portant un comonomère.
